# EUROPEAN PATENT APPLICATION

(11) **EP 3 330 843 A1**
(43) Date of publication of application: **06.06.2018**
(21) Application number: 15882431.8
(22) Date of filing: 19.10.2015
(51) Int. Cl.: G06F 3/0484, G06F 3/0346

(54) **METHOD, DEVICE AND REMOTE CONTROLLER FOR CONTROLLING PROJECTION CURSOR**

(30) Priority: 29.07.2015 CN 201510456605
(71) Applicant: ZTE Corporation, Shenzhen, Guangdong 518057 (CN)
(72) Inventor: WANG, Yuchen, Shenzhen Guangdong 518057 (CN)
(74) Representative: Carangelo, Pierluigi
(86) International application number: PCT/CN2015/092229
(87) International publication number: WO 2016/131292

(57) **Abstract**

A projection cursor control method and device and a remote controller are provided. In the method, a turning angle of a remote controller is acquired; a displacement of a light spot formed on a projection screen by projecting visible light emitted by a visible light emitter of the remote controller is calculated based on the turning angle and a spatial position relationship between the remote controller and the projection screen; a cursor position represented by a current projection position of the light spot on the projection screen is determined based on the displacement, a pixel width, represented by a horizontal displacement of a unit length on the projection screen, in a horizontal direction and a pixel height, represented by a vertical displacement of the unit length on the projection screen, in a vertical direction, wherein the cursor position may include a pixel position in the horizontal direction and a pixel position in the vertical direction; and a cursor in a picture projected on the projection screen is moved to the cursor position. The method solves a problem that a Bluetooth remote controller may not control the cursor for to move precisely in the related technology, and implements high-precision control over the cursor position.

## Description

### Technical Field

The present disclosure relates to the field of communications, and particularly to a projection cursor control method and device and a remote controller.

### Background

During projection of intelligent projection equipment, if a user is positioned in the vicinity of projection source equipment supporting a touch screen operation, the user, when needing to operate a projected picture, may touch a screen of the projection source equipment to change a position of a cursor. However, if the user is at a certain distance from the projection source equipment, the user is still possible to change the position of the cursor by virtue of a mouse. However, in order to properly use the mouse, a plane for placing the mouse may be needed. If there is no proper plane, it may be impossible to precisely move the cursor by using the mouse.

In a related technology, a Bluetooth remote controller may be adopted to change a position of a cursor. However, Bluetooth remote controllers in the related technology are able to change a position of a cursor only by virtue of a key. For example, keys for four directions, e.g., up, down, left and right may be provided on the Bluetooth remote controller. If a key for a direction is pressed once or for a certain period of time, the cursor may be controlled to move to the corresponding direction for a number of cells (for example, a cell may represent a half of a character width). Considering that a movement distance of a cursor is usually long, if a cursor movement distance represented by each key pressing is set to be excessively short, the user may need to frequently press the key in order to move the cursor for a relatively long distance. If the cursor movement distance represented by each key pressing is set to be excessively long, the user may be unable to control the cursor to move precisely, thereby bringing inconvenience especially under a scenario where the cursor movement distance needs to meet a certain precision requirement.

For a problem that a Bluetooth remote controller may not control a cursor to move precisely in the related technology, there is yet no effective solution at present.

### Summary

Some embodiments of the present disclosure provide a projection cursor control method and device and a remote controller, which may at least solve a problem that a Bluetooth remote controller may not control a cursor to move precisely in the related technology.

According to an embodiment of the present disclosure, a projection cursor control method is provided, which may include the following acts. A turning angle of a remote controller may be acquired. A displacement of a light spot formed on a projection screen by projecting visible light emitted by a visible light emitter of the remote controller may be calculated based on the turning angle and a spatial position relationship between the remote controller and the projection screen. A cursor position represented by a current projection position of the light spot on the projection screen may be determined based on the displacement, a pixel width, represented by a horizontal displacement of a unit length on the projection screen, in a horizontal direction and a pixel height, represented by a vertical displacement of the unit length on the projection screen, in a vertical direction, and the cursor position may include a pixel position in the horizontal direction and a pixel position in the vertical direction. A cursor in a picture projected on the projection screen may be moved to the cursor position.

In an exemplary embodiment, before the displacement of the light spot formed on the projection screen by projecting the visible light emitted by the visible light emitter of the remote controller is calculated based on the turning angle and the spatial position relationship between the remote controller and the projection screen, the method may further include the following acts. Under a circumstance that the light spot formed on the projection screen by projecting the visible light emitted by the visible light emitter is overlapped with at least three calibration points projected on the projection screen respectively, a distance between each calibration point in the at least three calibration points and the remote controller and an angle between each calibration point in the at least three calibration points and the visible light emitted by the visible light emitter may be acquired, herein the at least three calibration points may not be on a same straight line. The spatial position relationship between the remote controller and the projection screen may be determined based on the acquired distance and angle.

In an exemplary embodiment, before the displacement of the light spot formed on the projection screen by projecting the visible light emitted by the visible light emitter of the remote controller is calculated based on the turning angle and the spatial position relationship between the remote controller and the projection screen, the method may further include the following act. The pixel width, represented by the horizontal displacement of the unit length on the projection screen, in the horizontal direction and the pixel height, represented by the vertical displacement of the unit length on the projection screen, in the vertical direction may be determined based on the spatial position relationship.

In an exemplary embodiment, the distance between each calibration point in the at least three calibration points and the remote controller may be acquired in the following manner. The distance between each calibration point in the at least three calibration points and the remote controller may be detected through a distance detector on the remote controller.

In an exemplary embodiment, the angle between each calibration point in the at least three calibration points and the visible light emitted by the visible light emitter may be acquired in a following manner. An angle change of the remote controller may be detected through a sensor on the remote controller, the sensor may include: a gravity sensor and/or a gyroscope sensor. The angle between each calibration point in the at least three calibration points and the visible light emitted by the visible light emitter may be calculated based on an initial angle of the visible light emitted by the visible light emitter and the angle change.

In an exemplary embodiment, the pixel width, represented by the horizontal displacement of the unit length on the projection screen, in the horizontal direction and the pixel height, represented by the vertical displacement of the unit length on the projection screen, in the vertical direction may be determined based on the spatial position relationship in a following manner. A distance between every two calibration points in the at least three calibration points may be calculated based on the spatial position relationship. The pixel width, represented by the horizontal displacement of the unit length on the projection screen, in the horizontal direction and the pixel height, represented by the vertical displacement of the unit length on the projection screen, in the vertical direction may be determined based on a pixel width and pixel height between every two calibration points in the three calibration points and the distance between every two calibration points in the at least three calibration points.

According to another embodiment of the present disclosure, a projection cursor control device is provided, which may include a first acquisition module, a calculation module, a first determination module and a movement module. The first acquisition module may be configured to acquire a turning angle of a remote controller. The calculation module may be configured to calculate a displacement of a light spot formed on a projection screen by projecting visible light emitted by a visible light emitter of the remote controller based on the turning angle and a spatial position relationship between the remote controller and the projection screen. The first determination module may be configured to determine a cursor position represented by a current projection position of the light spot on the projection screen based on the displacement, a pixel width, represented by a horizontal displacement of a unit length on the projection screen, in a horizontal direction and a pixel height, represented by a vertical displacement of the unit length on the projection screen, in a vertical direction, wherein the cursor position may include a pixel position in the horizontal direction and a pixel position in the vertical direction. The movement module may be configured to move a cursor in a picture projected on the projection screen to the cursor position.

In an exemplary embodiment, the device may further include a second acquisition module and a second determination module. The second acquisition module may be configured to, under a circumstance that the light spot formed on the projection screen by projecting the visible light emitted by the visible light emitter is overlapped with at least three calibration points projected on the projection screen respectively, acquire a distance between each calibration point in the at least three calibration points and the remote controller and acquire an angle between each calibration point in the at least three calibration points and the visible light emitted by the visible light emitter, wherein the at least three calibration points may not be on a same straight line. The second determination module may be configured to determine the spatial position relationship between the remote controller and the projection screen based on the acquired distance and angle.

In an exemplary embodiment, the device may further include a third determination module. The third determination module may be configured to determine the pixel width, represented by the horizontal displacement of the unit length on the projection screen, in the horizontal direction and the pixel height, represented by the vertical displacement of the unit length on the projection screen, in the vertical direction based on the spatial position relationship.

According to still another embodiment of the present disclosure, a remote controller is provided, which may include a distance detector, a sensor, a visible light emitter, a signal transceiver and a processor. The distance detector, the sensor, the visible light emitter and the signal transceiver may be connected with the processor respectively.

The sensor may be configured to acquire a turning angle of the remote controller. The sensor and the distance detector may further be configured to acquire a spatial position relationship between the remote controller and a projection screen. The visible light emitter may be configured to emit visible light to project a light spot on the projection screen; the processor may be configured to calculate, based on the turning angle and the spatial position relationship between the remote controller and the projection screen, a displacement of the light spot formed on the projection screen by projecting the visible light emitted by the visible light emitter of the remote controller. The processor may further be configured to determine a cursor position represented by a current projection position of the light spot on the projection screen based on the displacement, a pixel width, represented by a horizontal displacement of a unit length on the projection screen, in a horizontal direction and a pixel height, represented by a vertical displacement of the unit length on the projection screen, in a vertical direction, wherein the cursor position may include a pixel position in the horizontal direction and a pixel position in the vertical direction. The signal transceiver may be configured to send the cursor position to a projection source to enable the projection source to move a cursor in a picture projected on the projection screen to the cursor position.

According to some embodiments of the present disclosure, the following solution is adopted. A turning angle of a remote controller may be acquired. A displacement of a light spot formed on a projection screen by projecting a visible light emitted by a visible light emitter of the remote controller may be calculated based on the turning angle and the spatial position relationship between the remote controller and the projection screen. A cursor position represented by a current projection position of the light spot on the projection screen may be determined based on the displacement, a pixel width, represented by a horizontal displacement of a unit length on the projection screen, in a horizontal direction and a pixel height, represented by a vertical displacement of a unit length on the projection screen, in a vertical direction, wherein the cursor position may include the pixel position in the horizontal direction and the pixel position in the vertical direction. A cursor in a picture projected on the projection screen may be moved to the cursor position. A problem that a Bluetooth remote controller may not control the cursor for to move precisely in the related technology may be solved, and high-precision control over the cursor position may be implemented.

### Brief Description of the Drawings

The drawings described here are adopted to provide a deeper understanding to the present disclosure, and form a part of the application. The schematic embodiments of the present disclosure and descriptions thereof are adopted to explain the present disclosure and not intended to form improper limits to the present disclosure. In the drawings:
Fig. 1 is a flowchart of a projection cursor control method according to an embodiment of the present disclosure;
Fig. 2 is a schematic diagram of determining a pixel position of a cursor based on a turning angle of a remote controller according to an embodiment of the present disclosure;
Fig. 3 is a structure block diagram of a projection cursor control device according to an embodiment of the present disclosure;
Fig. 4 is a structure diagram of a remote controller according to an embodiment of the present disclosure;
Fig. 5 is a schematic diagram of a calibration method according to an exemplary embodiment of the present disclosure;
Fig. 6 is a schematic diagram of user position change according to an exemplary embodiment of the present disclosure;
Fig. 7 is a flowchart of a projection cursor control method according to an exemplary embodiment of the present disclosure; and
Fig. 8 is an optional flowchart of a projection cursor control method according to an exemplary embodiment of the present disclosure.

### Detailed Description of the Embodiments

The present disclosure will be described below with reference to the drawings and in combination with embodiments in detail. It may be appreciated that the embodiments in the application and characteristics in the embodiments may be combined without conflicts.

It may be appreciated that terms "first", "second" and the like in the specification, claims and drawings of the present disclosure are adopted not to describe a specific sequence or order but to distinguish similar objects.

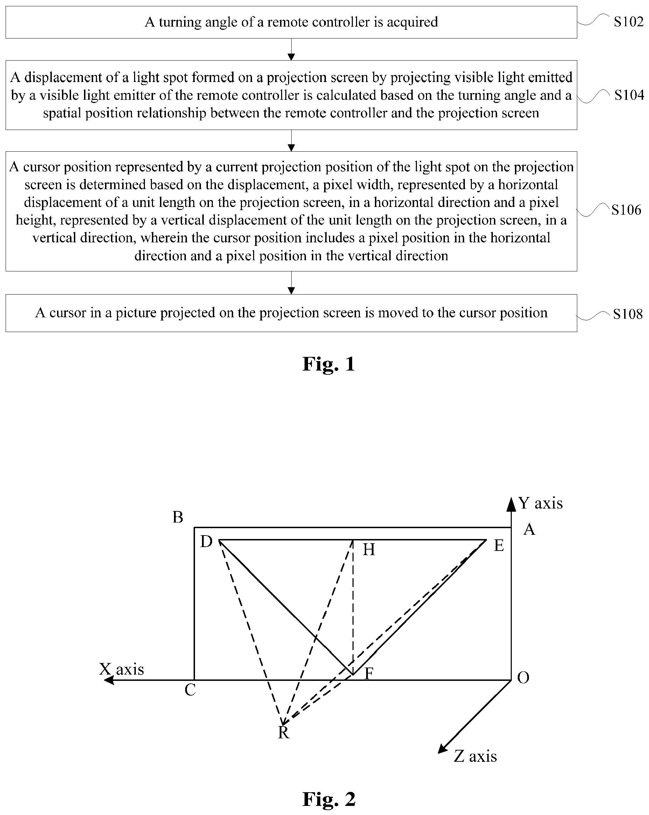

An embodiment provides a projection cursor control method. Fig. 1 is a flowchart of a projection cursor control method according to an embodiment of the present disclosure. As shown in Fig. 1, the flow may include the following acts.

At act S102, a turning angle of a remote controller may be acquired.

At act S104, a displacement of a light spot formed on a projection screen by projecting visible light emitted by a visible light emitter of the remote controller may be calculated based on the turning angle and a spatial position relationship between the remote controller and the projection screen.

At act S106, a cursor position represented by a current projection position of the light spot on the projection screen may be determined based on the displacement, a pixel width, represented by a horizontal displacement of a unit length on the projection screen, in a horizontal direction and a pixel height, represented by a vertical displacement of the unit length on the projection screen, in a vertical direction. The cursor position may include a pixel position in the horizontal direction and a pixel position in the vertical direction.

At act S108, a cursor in a picture projected on the projection screen may be moved to the cursor position.

By the acts, after the spatial position relationship between the remote controller and the projection screen is determined, the displacement of the light spot emitted by the remote controller on the projection screen may be calculated based on the turning angle of the remote controller. Furthermore, the cursor position represented by the current projection position on the projection screen may be determined in combination with the pixel width, represented by the horizontal displacement of the unit length on the projection screen, in the horizontal direction and the pixel height, represented by the vertical displacement of the unit length on the projection screen, in the vertical direction. In such a manner, the turning angle of the remote controller and the cursor position are mapped, so that a pixel width and pixel height for movement of the cursor may directly be calculated based on the turning angle of the remote controller under a circumstance that a position of the remote controller is kept unchanged. Compared with a key pressing operation, angle control of the user over the remote controller is higher in precision, and may provide a more convenient and intuitive operation experience for the user. In addition, pixel-level movement precision may completely meet a high-precision cursor movement requirement. Thus it can be seen that a problem that a Bluetooth remote controller may not control the cursor for to move precisely in the related technology may be solved by virtue of the solution, and high-precision control over the cursor position may be implemented.

In an exemplary embodiment, the method may be implemented through the remote controller, and may alternatively be implemented by cooperation of the remote controller and other equipment. For example, the remote controller may acquire needed parameters (for example, information about a distance and angle between the remote controller and the projection screen) and send these parameters to the other equipment for processing, and the cursor position may be determined and changed through the other equipment. In the embodiment of the present disclosure, descriptions and explanations will be made with independent execution through the remote controller as an example.

In an exemplary embodiment, since a mapping relationship between an angle and a cursor position may be different when the user is at different positions (that is, the remote controller is at different positions), before the cursor is controlled, the spatial position relationship between the remote controller and the projection screen may be determined. Determination of the spatial position relationship may be implemented by calibration. For example, under a circumstance that the light spot formed on the projection screen by projecting the visible light emitted by the visible light emitter is overlapped with at least three calibration points projected on the projection screen respectively, a distance between each calibration point in the at least three calibration points and the remote controller and an angle between each calibration point in the at least three calibration points and the visible light emitted by the visible light emitter may be acquired. In the exemplary embodiment, the at least three calibration points are not on a same straight line. The spatial position relationship between the remote controller and the projection screen may be determined based on the acquired distance and angle. After the spatial position relationship is determined, a spatial geometric model may be established, and then related parameters which may subsequently be utilized may be calculated by virtue of the spatial geometric model.

In an exemplary embodiment, before the displacement of the light spot formed on the projection screen by projecting the visible light emitted by the visible light emitter of the remote controller is calculated based on the turning angle and the spatial position relationship between the remote controller and the projection screen, the pixel width, represented by the horizontal displacement of the unit length on the projection screen, in the horizontal direction and the pixel height, represented by the vertical displacement of the unit length on the projection screen, in the vertical direction may be determined based on the spatial position relationship.

In an exemplary embodiment, the distance between each calibration point in the at least three calibration points and the remote controller may be acquired in a following manner. The distance between each calibration point in the at least three calibration points and the remote controller may be detected through a distance detector on the remote controller.

In an exemplary embodiment, the angle between each calibration point in the at least three calibration points and the visible light emitted by the visible light emitter may be acquired in a following manner. An angle change of the remote controller may be detected through a sensor on the remote controller, wherein the sensor may include a gravity sensor and/or a gyroscope sensor. The angle between each calibration point in the at least three calibration points and the visible light emitted by the visible light emitter may be calculated based on an initial angle of the visible light emitted by the visible light emitter and the angle change.

In an exemplary embodiment, the pixel width, represented by the horizontal displacement of the unit length on the projection screen, in the horizontal direction and the pixel height, represented by the vertical displacement of the unit length on the projection screen, in the vertical direction may be determined based on the spatial position relationship in the following manner. A distance between every two calibration points in the at least three calibration points may be calculated based on the spatial position relationship. The pixel width, represented by the horizontal displacement of the unit length on the projection screen, in the horizontal direction and the pixel height, represented by the vertical displacement of the unit length on the projection screen, in the vertical direction may be determined based on a pixel width and pixel height between every two calibration points in the three calibration points and the distance between every two calibration points in the at least three calibration points.

The method for calculating the related parameters by virtue of the spatial geometric model directs to a mathematical problem about spatial geometry, and feasibility in calculation of the related parameters can be proved. There are multiple manners of solving the related parameters. In the embodiment of the present disclosure, a manner for solving the related parameters is not limited, and the following are merely exemplary descriptions.

Fig. 2 is a schematic diagram of determining a pixel position of a cursor based on a turning angle of a remote controller according to an embodiment of the present disclosure. As shown in Fig. 2, an X axis represents a horizontal direction, a Y axis represents a vertical direction, and X, Y and Z axes are perpendicular to each other. A quadrangle OABC represents a projection screen, D, E and F represent three calibration points respectively, and a point R is a position of the remote controller.

In Fig. 2, RD, RE and RF represent visible light emitted by a visible light emitter, their respective distances may be detected through a distance detector, ∠DRE, ∠ ERF and ∠FRD may be detected through a sensor respectively. In three triangles namely ΔERD, ΔERF and ΔFRD, since two sides and an included angle between the two sides are known, each angle and each length of ΔDEF can be determined. For DE, a pixel width between DE is known to be, for example, a 1,000-pixel width, that is, there are totally 1,000 pixels in the horizontal direction from the point D to the point E. If a pointing direction of the remote controller (i.e. a direction of the light emitted by the visible light emitter, represented as a light spot on the projection screen) turns from pointing to the point D to pointing to a point H, a turning angle is ZDRH. A length of DH may be calculated based on the turning angle. A pixel width from the point H to the point D may be calculated based on a ratio of DH to DE, thereby determining a cursor position of the point H. For example, when the point H is a midpoint of DE, the cursor position represented by the point H is a position after the point D moves rightwards for a 500-pixel width.

It may be appreciated that, even though it is supposed that DH=HE, angle numerical values of ∠DRH and ∠ERH may be unequal. In other words, under a circumstance that the angle numerical values of ∠DRH and ∠ERH are equal, corresponding pixel widths (or pixel heights) may also be unequal. Therefore, the acquired angle is suggested to be represented in a vector manner.

From the above descriptions about the implementation modes, those skilled in the art may clearly know that the method according to the embodiment may be implemented in a manner of combining software and a necessary universal hardware platform, and of course, may alternatively be implemented through hardware. Under many circumstances, the former may be a preferred implementation mode. Based on such an understanding, the technical solution of the embodiment of the present disclosure substantially or parts making contributions to a conventional art may be embodied in form of software product. The computer software product may be stored in a storage medium (for example, a Read-Only Memory (ROM)/Random Access Memory (RAM), a magnetic disk and an optical disk), including a plurality of instructions configured to enable a piece of terminal equipment (which may be a mobile phone, a computer, a server, network equipment or the like) to execute the method of each embodiment of the present disclosure.

An embodiment provides a projection cursor control device. The device may be configured to implement the abovementioned embodiment and exemplary implementation modes, and what has been described will not be elaborated. For example, term "module", used below, may be a combination of software and/or hardware capable of realizing a preset function. Although the device described in the following embodiment is preferably implemented with software, implementation with hardware or a combination of the software and the hardware is also possible and conceivable.

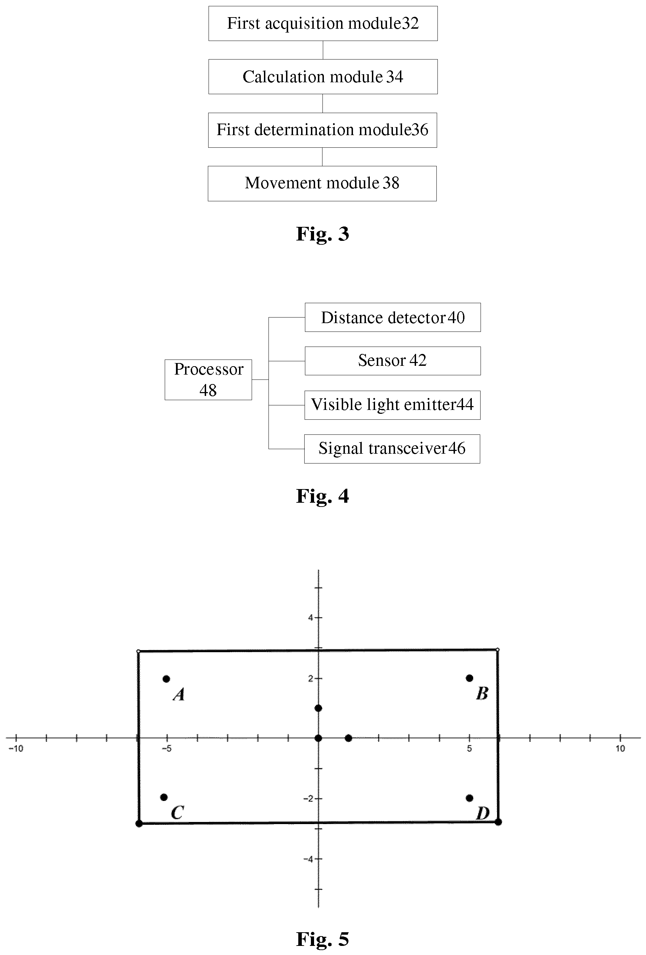

Fig. 3 is a structure block diagram of a projection cursor control device according to an embodiment of the present disclosure. As shown in Fig. 3, the device may include a first acquisition module 32, a calculation module 34, a first determination module 36 and a movement module 38. The first acquisition module 32 may be configured to acquire a turning angle of a remote controller. The calculation module 34 may be coupled to the first acquisition module 32, and may be configured to calculate, based on the turning angle and a spatial position relationship between the remote controller and a projection screen, a displacement of a light spot formed on the projection screen by projecting visible light emitted by a visible light emitter of the remote controller. The first determination module 36 may be coupled to the calculation module 34, and may be configured to determine a cursor position represented by a current projection position of the light spot on the projection screen based on the displacement, a pixel width, represented by a horizontal displacement of a unit length on the projection screen, in a horizontal direction and a pixel height, represented by a vertical displacement of the unit length on the projection screen, in a vertical direction. In the exemplary embodiment, the cursor position may include a pixel position in the horizontal direction and a pixel position in the vertical direction. The movement module 38 may be coupled to the first determination module 36, and may be configured to move a cursor in a picture projected on the projection screen to the cursor position.

In an exemplary embodiment, the device may further include a second acquisition module and a second determination module. The second acquisition module may be configured to, under a circumstance that the light spot formed on the projection screen by projecting the visible light emitted by the visible light emitter is overlapped with at least three calibration points projected on the projection screen respectively, acquire a distance between each calibration point in the at least three calibration points and the remote controller and an angle between each calibration point in the at least three calibration points and the visible light emitted by the visible light emitter. In the exemplary embodiment, the at least three calibration points are not on a same straight line. The second determination module may be coupled to the second acquisition module and the calculation module 34 and configured to determine the spatial position relationship between the remote controller and the projection screen based on the acquired distance and angle.

In an exemplary embodiment, the device may further include a third determination module. The third determination module may be coupled to the first determination module 36 and configured to determine the pixel width, represented by the horizontal displacement of the unit length on the projection screen, in the horizontal direction and the pixel height, represented by the vertical displacement of the unit length on the projection screen, in the vertical direction based on the spatial position relationship.

Another embodiment of the present disclosure provides a remote controller, which may be configured to implement the projection cursor control method.

Fig. 4 is a structure diagram of a remote controller according to an embodiment of the present disclosure. As shown in Fig. 4, the remote controller may include a distance detector 40, a sensor 42, a visible light emitter 44, a signal transceiver 46 and a processor 48. The distance detector 40, the sensor 42, the visible light emitter 44 and the signal transceiver 46 may be connected with the processor 48 respectively.

The sensor 42 may be configured to acquire a turning angle of the remote controller.

The sensor 42 and the distance detector 40 may be further configured to acquire a spatial position relationship between the remote controller and a projection screen.

The visible light emitter 44 may be configured to emit visible light to project a light spot on the projection screen.

The processor 48 may be configured to calculate, based on the turning angle and the spatial position relationship between the remote controller and the projection screen, a displacement of the light spot formed on the projection screen by projecting the visible light emitted by the visible light emitter of the remote controller.

The processor 48 may be further configured to determine a cursor position represented by a current projection position of the light spot on the projection screen based on the displacement, a pixel width, represented by a horizontal displacement of a unit length on the projection screen, in a horizontal direction and a pixel height, represented by a vertical displacement of the unit length on the projection screen, in a vertical direction. In the exemplary embodiment, the cursor position may include a pixel position in the horizontal direction and a pixel position in the vertical direction.

The signal transceiver 46 may be configured to send the cursor position to a projection source to enable the projection source to move a cursor in a picture projected on the projection screen to the cursor position.

It may be appreciated that each of the modules may be implemented through software or hardware, and the latter may be implemented in, but not limited to, the following manner. All of the modules may be located in the same processor, or, the modules may be located in multiple processors respectively.

Still another embodiment of the present disclosure provides software, which may be configured to execute the technical solutions described in the embodiments and preferred implementation modes.

Still another embodiment of the present disclosure provides a storage medium. In the embodiment, the storage medium may be configured to store program codes configured to execute the following acts.

At act S102, a turning angle of a remote controller may be acquired.

At act S104, a displacement of a light spot formed on a projection screen by projecting visible light emitted by a visible light emitter of the remote controller may be calculated based on the turning angle and a spatial position relationship between the remote controller and the projection screen.

At act S106, a cursor position represented by a current projection position of the light spot on the projection screen may be determined based on the displacement, a pixel width, represented by a horizontal displacement of a unit length on the projection screen, in a horizontal direction and a pixel height, represented by a vertical displacement of the unit length on the projection screen, in a vertical direction. The cursor position may include a pixel position in the horizontal direction and a pixel position in the vertical direction.

At act S108, a cursor in a picture projected on the projection screen may be moved to the cursor position.

In the embodiment, the storage medium may include, but not limited to: various media capable of storing program codes such as a U disk, a ROM, a RAM, a mobile hard disk, a magnetic disk or an optical disk.

Examples in the embodiment may refer to examples described in the abovementioned embodiments and exemplary implementation modes, and will not be elaborated in the embodiment.

For describing the embodiments of the present disclosure more clearly, descriptions and explanations will be made below in combination with an exemplary embodiment.

In the exemplary embodiment of the present disclosure, a Bluetooth remote controller is adopted for description and explanation. The Bluetooth remote controller refers to a remote controller of which a signal transceiver device is a Bluetooth device. The Bluetooth remote controller may implement communication between the remote controller and projection equipment in a Bluetooth transmission manner, and may also transmit a key value of a key of the remote controller to the projection equipment to enable the projection equipment to complete a certain operation.

A laser indicator (equivalent to the abovementioned visible light emitter) may be integrated to a front end of the Bluetooth remote controller. The laser indicator, also called as a laser pen, is a pen type emitter which is designed to emit visible laser light, is portable and easy to handhold and is machined from a laser module (light-emitting diode). A common laser indicator may include red light (wavelength (λ)=650∼660nm, 635nm), green light (λ =515-520nm, 532nm), blue light (λ =445∼450nm), blue-purple light (λ =405nm) and the like. The laser indicator is usually used by a reporter, a teacher or a tour guide for projecting a light spot or a beam to point to an object.

In the Bluetooth remote controller of the exemplary embodiment of the present disclosure, there is also a built-in gyroscope (equivalent to the abovementioned sensor) capable of measuring a horizontal or vertical movement angle of the device.

In the Bluetooth remote controller of the exemplary embodiment of the present disclosure, a distance sensor (equivalent to the abovementioned distance detector) is also integrated to a front end.

In addition, a coordinate calculation unit, a cursor movement unit, an angle processing unit and a calibration module may also be deployed for cooperative work in the exemplary embodiment of the present disclosure. The coordinate calculation unit, the cursor movement unit, the angle processing unit and the calibration module may be located in the Bluetooth remote controller, and may alternatively be located in a projector. The locations of these units are not limited in the embodiment of the present disclosure.

An existing Bluetooth remote controller with an integrated gyroscope may be applied to a television, and does not have a calibration function. Since a distance between a user and the television is limited and the television may be operated within a small range, there may not be a big error. During application to the projector for projection of a large-size screen, since a distance between the user and a projected surface may be unfixed and, when the projector is at different distances from the projected surface, sizes of projected pictures may also be different and angles when the user swipes the same picture under different circumstances may be greatly different, precise positioning is hard to be implemented. Therefore, the solution proposes a process of calibration before use, and precision may be enhanced after the calibration.

A projection cursor control method provided by the exemplary embodiment of the present disclosure may include the following acts.

At act 1, calibration is performed before projection. Fig. 5 is a schematic diagram of a calibration method according to an exemplary embodiment of the present disclosure. As shown in Fig. 5, the calibration method is as follows.

Four points (for example, points A, B, C and D in Fig. 5) may be determined on a screen. The user respectively points to each point in a calibration process, and meanwhile longitudinal and transverse turning angles of the Bluetooth remote controller may be acquired through a gyroscope device arranged in the Bluetooth remote controller respectively. In addition, a distance to each point may be detected through the distance sensor. A spatial geometric model configured to calculate a turning angle and a displacement of a light spot on the screen may be established based on the acquired angles and distances.

In addition, distances between the four points may further be calculated based on the spatial geometric model, and then a relationship between a turning angle of the Bluetooth remote controller and a pixel distance may be calculated based on the pixel distances between the four points.

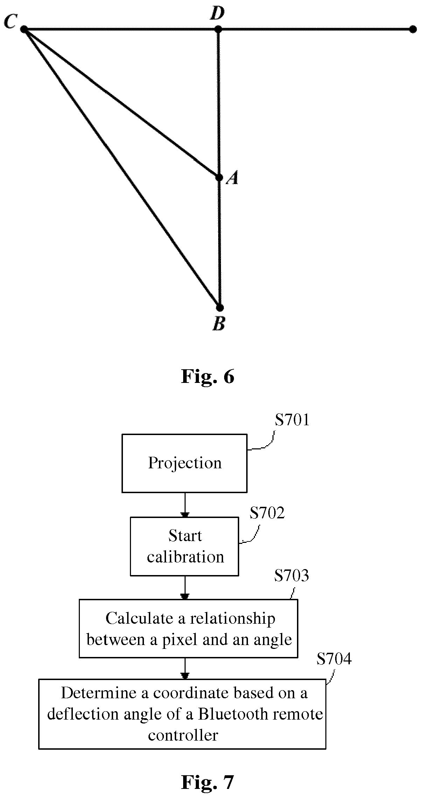

Fig. 6 is a schematic diagram of user position change according to an exemplary embodiment of the present disclosure. As shown in Fig. 6, assuming that the point A is a first position of the user, and on this position, the user may turn the remote controller by X degrees if he operates the laser indicator of the remote controller to make the light spot move from the point D to the point C. While when the user is at the point B, the user may turn the remote controller by Y degrees if he operates the laser indicator of the remote controller to make the light spot move from the point D to the point C. However, from the figure, it may be known that, although values of X and Y are different, a movement distance of light spot projected by the laser indicator on the projection screen is the same. Therefore, it can be seen that, after the position of the user is changed, the corresponding relationship between the turning angle of the Bluetooth remote controller and the pixel distance of the cursor may be changed. Therefore, after the position of the user is changed, recalibration is suggested.

Fig. 7 is a flowchart of a projection cursor control method according to an exemplary embodiment of the present disclosure. As shown in Fig. 7, the method may include the following acts.

At act S701, the projector starts projecting a picture.

At act S702, a calibration flow is started.

At act S703, a relationship between a pixel and an angle is calculated.

At act S704, a cursor and a coordinate are determined based on a deflection angle.

During a practical application, angle information may be transmitted by virtue of communication between the Bluetooth remote controller and equipment, and the angle and the coordinate may be calculated by the equipment.

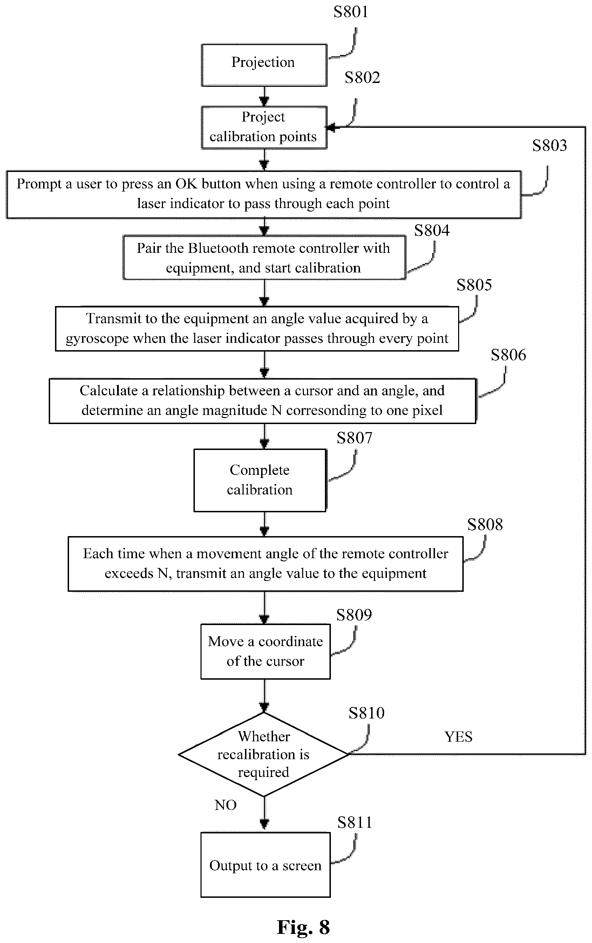

Fig. 8 is an optional flowchart of a projection cursor control method according to an exemplary embodiment of the present disclosure. As shown in Fig. 8, the optional flow may include the following acts.

At act S801, the projector is fixed at a position, and starts projection.

At act S802, calibration is started, and a calibration picture is projected to a projected surface, the calibration picture including four calibration points.

At act S803, at this moment, the user is prompted to press an OK button when using the remote controller to control the laser indicator to sequentially pass through each calibration point.

At act S804, the Bluetooth remote controller is paired with the projector, and starts calibration. At this moment, the OK button of the remote controller is pressed every time when the laser indicator passes through a point.

At act S805, every time when the OK button is pressed, an angle value and distance value at this point are transmitted to the projector.

At act S806, the angle processing unit calculates a relationship between a pixel and a movement angle, and determines a movement angle N° corresponding to one pixel.

At act S807, calibration work is completed, and a normal using state is entered.

At act S808, in a normal using process, each time when the movement angle exceeds N, the remote controller transmits an angle value to the angle processing unit of the equipment.

At act S809, the cursor movement unit determines a coordinate, to which the cursor needs to be moved, based on the changed angle value.

At act S810, whether recalibration of the user is required or not is judged. If the user clicks a recalibration button, act S802 is automatically executed for recalibration.

At act S811, the coordinate of the cursor is determined and projected into the picture.

From the above, by virtue of some embodiments of the present disclosure, the user may place the projector at any posture, after a power supply is switched on and a projection switch is turned on, projector cursor calibration may be started after the projector enters a stable state, and after calibration, the user may remotely and precisely move the cursor only with the remote controller.

### Industrial Applicability

From the above descriptions, it can be known that, in the present disclosure, after the spatial position relationship between the remote controller and the projection screen is determined, the displacement of the light spot emitted by the remote controller on the projection screen may be calculated based on the turning angle of the remote controller. Furthermore, the cursor position represented by the current projection position on the projection screen may be determined based on the pixel width, represented by the horizontal displacement of the unit length on the projection screen, in the horizontal direction and the pixel height, represented by the vertical displacement of the unit length on the projection screen, in the vertical direction. In such a manner, the turning angle of the remote controller and the cursor position are mapped, so that the pixel width and pixel height for movement of the cursor may directly be calculated based on the turning angle of the remote controller under a circumstance that the position of the remote controller is kept unchanged. Compared with a key pressing operation, angle control of the user over the remote controller is higher in precision, and may provide a more convenient and intuitive operation experience for the user. In addition, pixel-level movement precision may completely meet a high-precision cursor movement requirement. Thus it can be seen that, by the acts, a problem that a Bluetooth remote controller may not control the cursor for to move precisely in the related technology may be solved, and high-precision control over the cursor position may be implemented.

Obviously, those skilled in the art should know that each module or each step of the present disclosure may be implemented by a universal computing device, and the modules or acts may be concentrated on a single computing device or distributed on a network formed by a plurality of computing devices, and may optionally be implemented by program codes executable for the computing devices, so that the modules or acts may be stored in a storage device for execution with the computing devices, the shown or described acts may be executed in sequences different from those described here in some circumstances, or may form each integrated circuit module respectively, or multiple modules or acts therein may form a single integrated circuit module for implementation. As a consequence, the present disclosure is not limited to any specific hardware and software combination.

The above is only the exemplary embodiment of the present disclosure and not intended to limit the present disclosure. For those skilled in the art, the present disclosure may have various modifications and variations. Any modifications, equivalent replacements, improvements and the like made within the principle of the present disclosure shall fall within the scope of protection of defined by the appended claims of the present disclosure.

## Claims

1. A projection cursor control method, comprising:
acquiring a turning angle of a remote controller;
calculating, based on the turning angle and a spatial position relationship between the remote controller and a projection screen, a displacement of a light spot formed on the projection screen by projecting visible light emitted by a visible light emitter of the remote controller;
determining a cursor position represented by a current projection position of the light spot on the projection screen based on the displacement, a pixel width, represented by a horizontal displacement of a unit length on the projection screen, in a horizontal direction and a pixel height, represented by a vertical displacement of the unit length on the projection screen, in a vertical direction, wherein the cursor position comprises a pixel position in the horizontal direction and a pixel position in the vertical direction; and
moving a cursor in a picture projected on the projection screen to the cursor position.

2. The method as claimed in claim 1, before calculating, based on the turning angle and the spatial position relationship between the remote controller and the projection screen, the displacement of the light spot formed on the projection screen by projecting the visible light emitted by the visible light emitter of the remote controller, further comprising:
under a circumstance that the light spot formed on the projection screen by projecting the visible light emitted by the visible light emitter is overlapped with at least three calibration points projected on the projection screen respectively, acquiring a distance between each calibration point in the at least three calibration points and the remote controller and acquiring an angle between each calibration point in the at least three calibration points and the visible light emitted by the visible light emitter, wherein the at least three calibration points are not on a same straight line; and
determining the spatial position relationship between the remote controller and the projection screen based on the acquired distance and angle.

3. The method as claimed in claim 2, before calculating, based on the turning angle and the spatial position relationship between the remote controller and the projection screen, the displacement of the light spot formed on the projection screen by projecting the visible light emitted by the visible light emitter of the remote controller, further comprising:
determining the pixel width, represented by the horizontal displacement of the unit length on the projection screen, in the horizontal direction and the pixel height, represented by the vertical displacement of the unit length on the projection screen, in the vertical direction based on the spatial position relationship.

4. The method as claimed in claim 2, wherein acquiring the distance between each calibration point in the at least three calibration points and the remote controller comprises:
detecting the distance between each calibration point in the at least three calibration points and the remote controller through a distance detector on the remote controller.

5. The method as claimed in claim 2, wherein acquiring the angle between each calibration point in the at least three calibration points and the visible light emitted by the visible light emitter comprises:
detecting an angle change of the remote controller through a sensor on the remote controller, wherein the sensor comprises: a gravity sensor and/or a gyroscope sensor; and
calculating the angle between each calibration point in the at least three calibration points and the visible light emitted by the visible light emitter based on an initial angle of the visible light emitted by the visible light emitter and the angle change.

6. The method as claimed in claim 3, wherein determining the pixel width, represented by the horizontal displacement of the unit length on the projection screen, in the horizontal direction and the pixel height, represented by the vertical displacement of the unit length on the projection screen, in the vertical direction based on the spatial position relationship comprises:
calculating a distance between every two calibration points in the at least three calibration points based on the spatial position relationship; and
determining the pixel width, represented by the horizontal displacement of the unit length on the projection screen, in the horizontal direction and the pixel height, represented by the vertical displacement of the unit length on the projection screen, in the vertical direction based on a pixel width and pixel height between every two calibration points in the three calibration points and the distance between every two calibration points in the at least three calibration points.

7. A projection cursor control device, comprising:
a first acquisition module, configured to acquire a turning angle of a remote controller;
a calculation module, configured to calculate, based on the turning angle and a spatial position relationship between the remote controller and a projection screen, a displacement of a light spot formed on the projection screen by projecting visible light emitted by a visible light emitter of the remote controller;
a first determination module, configured to determine a cursor position represented by a current projection position of the light spot on the projection screen based on the displacement, a pixel width, represented by a horizontal displacement of a unit length on the projection screen, in a horizontal direction and a pixel height, represented by a vertical displacement of the unit length on the projection screen, in a vertical direction, wherein the cursor position comprises a pixel position in the horizontal direction and a pixel position in the vertical direction; and
a movement module, configured to move a cursor in a picture projected on the projection screen to the cursor position.

8. The device as claimed in claim 7, further comprising:
a second acquisition module, configured to, under a circumstance that the light spot formed on the projection screen by projecting the visible light emitted by the visible light emitter is overlapped with at least three calibration points projected on the projection screen respectively, acquire a distance between each calibration point in the at least three calibration points and the remote controller and acquire an angle between each calibration point in the at least three calibration points and the visible light emitted by the visible light emitter, wherein the at least three calibration points are not on a same straight line; and
a second determination module, configured to determine the spatial position relationship between the remote controller and the projection screen based on the acquired distance and angle.

9. The device as claimed in claim 8, further comprising:
a third determination module, configured to determine the pixel width, represented by the horizontal displacement of the unit length on the projection screen, in the horizontal direction and the pixel height, represented by the vertical displacement of the unit length on the projection screen, in the vertical direction based on the spatial position relationship.

10. A remote controller, comprising: a distance detector, a sensor, a visible light emitter, a signal transceiver and a processor, the distance detector, the sensor, the visible light emitter and the signal transceiver being connected with the processor respectively, wherein
the sensor is configured to acquire a turning angle of the remote controller;
the sensor and the distance detector are further configured to acquire a spatial position relationship between the remote controller and a projection screen;
the visible light emitter is configured to emit visible light to project a light spot on the projection screen;
the processor is configured to calculate, based on the turning angle and the spatial position relationship between the remote controller and the projection screen, a displacement of the light spot formed on the projection screen by projecting the visible light emitted by the visible light emitter of the remote controller;
the processor is further configured to determine a cursor position represented by a current projection position of the light spot on the projection screen based on the displacement, a pixel width, represented by a horizontal displacement of a unit length on the projection screen, in a horizontal direction and a pixel height, represented by a vertical displacement of the unit length on the projection screen, in a vertical direction, wherein the cursor position comprises a pixel position in the horizontal direction and a pixel position in the vertical direction; and
the signal transceiver is configured to send the cursor position to a projection source to enable the projection source to move a cursor in a picture projected on the projection screen to the cursor position.
